# EUROPÄISCHE PATENTSCHRIFT

(11) **EP 2 099 946 B1**
(45) Veröffentlichungstag und Bekanntmachung des Hinweises auf die Patenterteilung: **05.01.2011**
(21) Anmeldenummer: 07817709.4
(22) Anmeldetag: 20.10.2007
(51) Int. Cl.: C22C 30/00, C22C 38/04, C22C 38/06, C22C 38/44, C22C 38/48, C22C 38/50, C22C 38/52, B23K 35/30, C22C 38/00

(54) **EISEN-NICKEL-LEGIERUNG MIT HOHER DUKTILITÄT UND GERINGEM AUSDEHNUNGSKOEFFIZIENTEN**
IRON-NICKEL ALLOY WITH A HIGH LEVEL OF DUCTILITY AND A LOW EXPANSION COEFFICIENT
ALLIAGE FER-NICKEL À PLUS GRANDE DUCTILITÉ ET À COEFFICIENT DE DILATATION RÉDUIT

(30) Priorität: 02.12.2006 DE 102006056932
(43) Veröffentlichungstag der Anmeldung: 16.09.2009
(73) Patentinhaber: ThyssenKrupp VDM GmbH, 58791 Werdohl (DE)
(72) Erfinder: HOBERG, Bernd, 58792 Werdohl (DE); DE BOER, Bernd, 58762 Altena (DE)
(86) Internationale Anmeldenummer: PCT/DE2007/001875
(87) Internationale Veröffentlichungsnummer: WO 2008/064624

(56) Entgegenhaltungen:
- AT-B- 246 517
- DE-A1- 1 558 714
- DE-A1- 3 222 292
- DE-A1- 19 944 578
- JP-A- 57 207 160
- JP-A- 60 159 151
- JP-A- 2001 131 706
- US-A- 3 573 897

## Beschreibung

Die Erfindung betrifft eine mischkristallverfestigte Eisen-Nickel-Legierung mit hoher Duktilität und einem geringen Ausdehnungskoeffizienten im Tieftemperaturbereich.

Die JP-A 60221193 offenbart eine Eisen-Nickel-Legierung folgender Zusammensetzung (in Gew.-%):

| | |
|---|---|
| C | < 0,2 % |
| S | < 0,006 % |
| Ni | 35 - 37 % |
| Mn | 1-3% |
| Si | < 0,1 % |
| Ti | 0,2 - 0,5 % |
| P | < 0,02 % |
| Fe | Rest samt herstellungsbedingter Verunreinigungen. |

Diese Legierung kann als Schweißzusatz zu Ni 36-Legierungen eingesetzt werden.

Der DE-T 69125684 ist eine Legierung folgender Zusammensetzung (in Gew.-%) zu entnehmen:

| | |
|---|---|
| C | 0,1 - 0,35 % |
| S | 0 - 0,05 % |
| Cr | 0-2 % |
| Ni | 31 - 45 % |
| Mn | 0 - 2,5 % |
| Si | 0 - 1 % |
| Al | 0 - 0,5 % |
| Ti | 0 - 0,75 % |
| Nb | 0,1-4% |
| P | 0 - 0,05 % |
| Fe | Rest und herstellungsbedingte Verunreinigungen. |

Hier wird ein Schweißgut mit niedrigem Ausdehnungskoeffizienten beschrieben.

Die diesem Stand der Technik zugehörigen Legierungen sind aufgrund ihrer chemischen Zusammensetzung nicht zwangsläufig auch im Tieftemperaturbereich, beispielsweise zwischen Raumtemperatur und mindestens - 165°C einsetzbar, so dass es entsprechender Modifikationen der chemischen Zusammensetzung bedarf.

Durch die DE 1558714 A1 ist eine aushärtbare Nickellegierung folgender Zusammensetzung bekannt geworden: 36 - 42 % Nickel, 0 bis - 4 % Niob, 0 - 4 % Tantal, bei einem Gesamtgehalt an Niob und dem halben Tantalgehalt von 1,8 - 4 %, 1 - 2 % Titan, 0 - 0,1 % Kohlenstoff, 0 - 1 % Kobalt, 0 - 0,5 % Aluminium, 0 - 0,5 % Silizium und 0 - 0,5 % Mangan, Rest Eisen einschließlich Verunreinigungen. Diese Legierung kann als Werkstoff für Gegenstände verwendet werden, die bei Temperaturen von 20°C bis -251 °C eingesetzt werden.

Die DE 3222292 A1 offenbart eine Legierung des Invar-Typs mit geringem Wärmeausdehnungskoeffizienten und einem extrem guten Widerstand gegen Wärmerisse beim Schweißen. Die Legierung ist gekennzeichnet durch 30 - 45 % Nickel, nicht mehr als 0,04 % Kohlenstoff, 0,05 - 0,25 % Silizium, 0,1 - 0,4 % Mangan, nicht mehr als insgesamt 0,02 % Phosphor und Schwefel, nicht mehr als 0,006 % Sauerstoff. Darüber hinaus kann wenigstens ein zusätzliches Element ausgewählt aus 0,005 - 0,5 % Tantal, 0,001 - 0,1 % Hafnium, 0,1 - 2 % Molybdän und 0,1 - 2 % Wolfram.

Der US 3573897 ist eine Eisen-Basis-Legierung zu entnehmen, beinhaltend wenigstens 30 % Nickel, 0,02 - 0,1 % wenigstens eines der Elemente aus der Gruppe Vanadium, Titan, Zirkon, Niob, Rest Eisen und Verunreinigungen.

In der JP 57207160 A wird eine Legierung mit geringem thermischen Ausdehnungskoeffizienten beschrieben, beinhaltend 30 - 45 % Ni, ≤ 0,04 % C, 0,05 - 0,25 % Si, 0,1 - 0,4 % Mn und 0,01 - 1,5 % Co, Rest Eisen und Verunreinigungen. Bedarfsweise können dieser Legierung mindestens eines der Elemente 0,005 - 0,1 % Ca, 0,5 - 3 % Cr, 0,5 - 3 % Co, 0,01 - 0,5 % Ti und 0,01 - 0,5 % Zr zugesetzt werden.

Die AT 246517 offenbart ein Schweißzusatzmaterial auf Basis von Eisen und Nickel zum Schmelzschweißen unter Schutzgasatmosphäre. Das Material beinhaltet 30 - 60 % Nickel, 0,5 - 3 % Titan, bis zu 8 % Mangan, bis zu 0,8 % Kohlenstoff, bis zu 2,5 % Silizium, bis zu 0,1 % Kalzium, bis zu 40 % Kobalt, bis zu 10 % Chrom, bis zu 5 % Wolfram, bis zu 5 % Molybdän und bis zu 5 % Aluminium, Rest Eisen.

Schweißt man eine Eisenlegierung mit 36% Ni (Ni36), mit marktüblichen artgleichen oder artähnlichen Schweißzusätzen, dann weist unabhängig vom Schweißprozess die Schweißverbindung eine geringere Festigkeit auf, als der Grundwerkstoff. Bei dem überwiegenden Teil der Anwendung im Temperaturbereich oberhalb von 0°C ist dies kein grundlegender Nachteil, da die mechanischen Eigenschaften nur eine untergeordnete Rolle spielen. Dem steht der thermische Ausdehnungskoeffizient gegenüber, der bei dieser Eisen-Nickel-Legierung bekanntlich besonders klein ist.

Ziel des Erfindungsgegenstandes ist es, für Tieftemperaturanwendungen, insbesondere im Bereich ≤ -165°C, eine Legierung bereitzustellen, die neben einem geringen thermischen Ausdehnungskoeffizienten auch gute mechanische Eigenschaften aufweist, wobei die Legierung darüber hinaus gut schweißbar sein soll.

Dieses Ziel wird erreicht durch eine mischkristallverfestigte Eisen-Nickel-Legierung mit einem Ausdehnungskoeffizienten < 5 x 10⁻⁶/K im Temperaturbereich zwischen Raumtemperatur und - 200°C, bestehend aus (in Gew.-%):

| | |
|---|---|
| C | 0,005 - 0,05 % |
| S | < 0,02 % |
| Cr | 1-2% |
| Ni | 35 - 38 % |
| Mn | 0,3 - 1,5 % |
| Si | < 0,5 % |
| Al | 0,8 - 2,0 % |
| Ti | 0,2 - 1,0 % |
| Nb | 0,2 - 1,0 % |
| P | < 0,02 % |
| Co | 1,0-4,0 % |
| Fe | Rest und herstellungsbedingte Verunreinigungen. |

Vorteilhafte Weiterbildungen des Erfindungsgegenstandes sind den jeweils zugehörigen Unteransprüchen zu entnehmen.

Die erfindungsgemäße Legierung ist bevorzugt einsetzbar als Schweißzusatzwerkstoff für Anwendungen im Tieftemperaturbereich bis unter -196°C, insbesondere für Eisen-Nickel-Grundwerkstoffe mit geringem Wärmeausdehnungskoeffizienten.

Von besonderem Vorteil ist, dass die Tieftemperaturfestigkeitswerte des Schweißgutes oberhalb derjenigen Werte von binären Eisen-Nickel Legierungen mit Ni-Gehalten zwischen 32 und 42% vorgesehen sind.

Die erfindungsgemäße Legierung kann durch das MSG-, WIG- oder Plasmaschweißen mit einem Grundwerkstoff auf Basis einer Eisen-Nickel-Legierung mit geringem Ausdehnungskoeffizienten in Wirkverbindung gebracht werden.

Ein besonderer Anwendungsfall der erfindungsgemäßen Legierung wird im Bereich des Rohrleitungsbaus gesehen, insbesondere im Bereich von Rohrleitungen, die tiefen Temperaturen ≤ -160°C ausgesetzt sind. Dies betrifft insbesondere Rohrleitungen, in denen Flüssiggas transportiert wird.

Eine besonders vorteilhafte Zusammensetzung der erfindungsgemäßen Legierung wird wie folgt angegeben:

| | |
|---|---|
| C | 0,01 - 0,04 % |
| S | < 0,01 % |
| Cr | 1,0- 1,8 % |
| Ni | 35,5 - 37,5 % |
| Mn | 0,5 - 1,3 % |
| Si | max. 0,3 % |
| Al | 1,0 - 1,8 % |
| Ti | 0,4 - 0,8 % |
| Nb | 0,4 - 0,8 % |
| P | < 0,01 % |
| Co | 1,2 - 3,0 % |
| Fe | Rest und herstellungsbedingte Verunreinigungen. |

Zur weiteren Absenkung des Ausdehnungskoeffizienten wird folgende Legierungszusammensetzung vorgeschlagen:

| | |
|---|---|
| C | 0,02 - 0,03 % |
| S | < 0,01 % |
| Cr | 1,2 - 1,8 % |
| Ni | 36 - 37 % |
| Mn | 0,8 - 1,3 % |
| Si | max. 0,3 % |
| Al | 1,0 - 1,5 % |
| Ti | 0,4 - 0,7 % |
| Nb | 0,4 - 0,7 % |
| P | < 0,01 % |
| Co | 1,2 - 1,8 % |
| Fe | Rest und herstellungsbedingte Verunreinigungen. |

Schließlich ist bezüglich der erfindungsgemäßen Legierung noch folgende weitere Einschränkung der einzelnen Elemente denkbar:

| | |
|---|---|
| Al | 1,1 - 1,4 % |
| Co | 1,4 - 1,7 %. |

Je nach Anwendungsfall und Zusammensetzung des Erfindungsgegenstandes können zwischen Raumtemperatur und Temperaturen ≤ - 165°C mittlere Ausdehnungskoeffizienten < 4,5 x 10⁻⁶/K realisiert werden.

Die folgende Tabelle 1 zeigt Ist-Analysen von Versuchschargen (LB 1110, LB 1165 sowie LB 1107), wobei die Versuchscharge LB 1107 dem Erfindungsgegenstand zuzuordnen ist.

| **Element** | **LB 1110** | **LB 1165** | **LB 1107** |
|---|---|---|---|
| **C** | > 0,022 | 0,002 | > 0,017 |
| **S** | 0,002 | 0,002 | 0,0014 |
| **N** | 0,001 | 0,003 | 0,001 |
| **Cr** | > 1,48 | 1,45 | > 1,45 |
| **Ni** | 35,76 | 36,06 | 36,11 |
| **Mn** | > 0,99 | 0,95 | > 1,0 |
| **Si** | 0,04 | < 0,01 | 0,01 |
| **Mo** | > 1,54 | 1,56 | 0,02 |
| **W** | 0,71 | 0,65 | 0,01 |
| **Ti** | > 0,45 | 0,54 | 0,49 |
| **Cu** | 0,01 | 0,01 | 0,01 |
| **Fe** | R 56,831 | 56,15 | R 57,5382 |
| **P** | 0,003 | 0,003 | 0,002 |
| **Al** | > 0,037 | 0,005 | > 1,27 |
| **Mg** | 0,0005 | < 0,001 | 0,0005 |
| **Ca** | 0,0005 | < 0,0002 | 0,0005 |
| **Zr** | 0,01 | < 0,001 | 0,01 |
| **Co** | > 1,53 | 1,54 | > 1,49 |
| **B** | 0,001 | < 0,001 | 0,001 |
| **Nb** | 0,55 | 0,46 | 0,53 |

Aus diesen Legierungen wurden Rundstäbe mit 2,4 mm Durchmesser gefertigt.

Mit den Stäben wurden Schweißverbindungen mit Blech t = 5 mm aus Pernifer 36 sowie Schweißgutproben im WIG-Verfahren hergestellt. Die Zuordnung der Laborchargen und Schweißproben war wie folgt:

| **Laborcharge** | **Prüfstück** | **Probenart** |
|---|---|---|
| LB1107 | 2813 | Schweißverbindung |
| LB1107 | 2809 | Schweißgut |
| LB1110 | 2757 | Schweißverbindung |
| LB1165 | 2854 | Schweißverbindung |
| LB1165 | 2828 | Schweißgut |

Neben metallographischen Untersuchungen wurden das thermische Ausdehnungsverhalten und die mechanischen Eigenschaften untersucht.

Der mittlere thermische Ausdehnungskoeffizient (CTE) wurde an Proben der Gussblöcke LB 1110 und LB 1107 im Temperaturbereich zwischen - 163°C und 200°C bestimmt.

An den Schweißgutproben wurden folgende Untersuchungen durchgeführt:
- Kerbschlagarbeit bei - 196°C im Schweißgut, an der Schmelzlinie und in der Wärmeeinflusszone jeweils im Abstand von 2 mm und 5 mm von der Schmelzlinie an jeweils drei Proben
- Kerbschlagarbeit des Schweißgutes bei Raumtemperatur an drei Proben
- Zugversuch an jeweils zwei Schweißgutproben bei -196°C und bei Raumtemperatur.

An den Schweißverbindungen wurden folgende Untersuchungen durchgeführt:
- jeweils ein Biegeversuch mit Wurzel in Zugrichtung und Decklage in Zugrichtung mit einem Biegeradius von 2 x d
- Zugversuche bei Raumtemperatur bei -196°C jeweils mit Probenlage quer zur Schweißlinie.

Die Zugversuche der Schweißverbindungen wurden an Flachzugproben, die des Schweißgutes an Rundproben durchgeführt.

### Ergebnisse

### 1. Thermisches Ausdehnungsverhalten:

Der mittlere thermische Ausdehnungskoeffizient beider erfindungsgemäßer Legierungen ist für ausgewählte Temperaturen in Tabelle 2 einander gegenübergestellt. Abbildung 1 zeigt die Verläufe des CTE über den gesamten Temperaturbereich bezogen auf die Referenztemperatur 25°C.

**Tabelle 2: Gegenüberstellung des mittleren thermischen Ausdehnungskoeffizienten der untersuchten Legierungen bei ausgewählten Temperaturen.**

| Charge | -165°C - 25°C | 25°C - 100°C | 25°C - 200°C |
|---|---|---|---|
| LB 1107 | 4,12 × 10⁻⁶ | 6,02 × 10⁻⁶ | 9,04 × 10⁻⁶ |
| LB 1110 | 3,89 × 10⁻⁶ | 4,56 × 10⁻⁶ | 5,54 × 10⁻⁶ |

Im Bereich tiefer Temperaturen liegt der CTE deutlich unter 5 x 10⁻⁶/K.

Durch die Aufmischung des Grundwerkstoffs im Schweißgut kann davon ausgegangen werden, dass der mittlere Ausdehnungskoeffizient im Schweißgut von WIG- oder Plasma-Schweißverbindungen noch geringer ist.

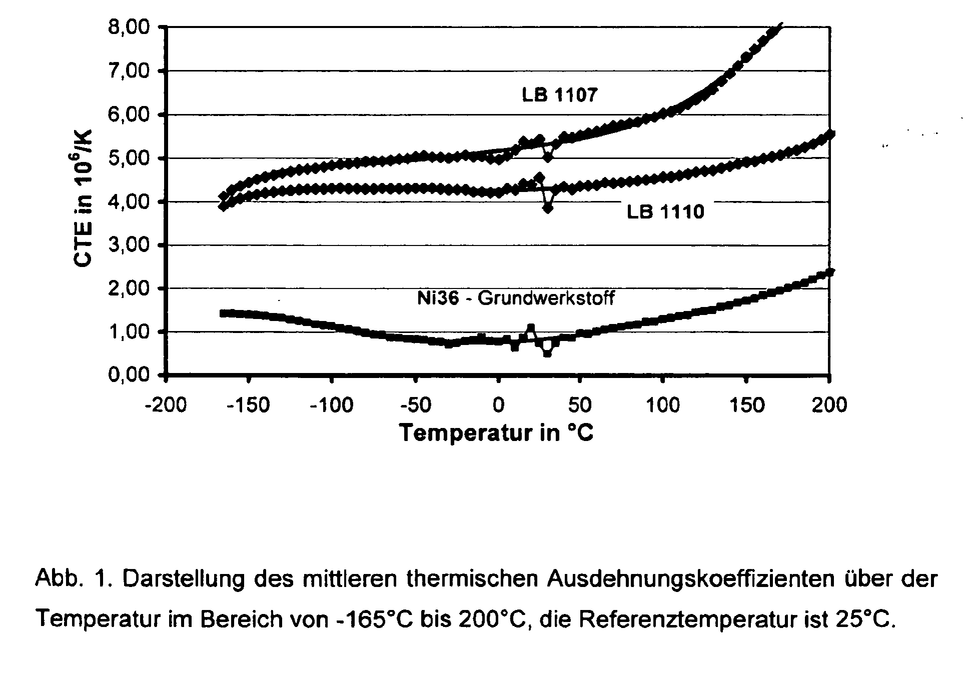

### 2. Mechanische Eigenschaften

Die hohe Bruchzähigkeit bei tiefen Temperaturen ist ein wichtiger Gesichtspunkt bei der Auswahl des Grundwerkstoffes Ni36 für Tieftemperaturanwendungen. Daher ist es wichtig, dass hohe Zähigkeitsniveaus auch im Schweißgut bzw. der Schweißverbindung erzielt werden.

Geprüft wurden das Schweißgut, die Schmelzlinie, sowie die Wärmeeinflusszone im Abstand von 2 mm und 5 mm von der Schmelzlinie bei einer Werkstofftemperatur von -196°C. Der Wert für die Kerbschlagzähigkeit, 5 mm von der Schmelzlinie entfernt, repräsentiert den Grundwerkstoff, da hier der Wärmeeinfluss des Schweißens vernachlässigbar ist.

Die Kerblage Schweißgut wurde auch bei Raumtemperatur geprüft.

Die Bruchzähigkeit weist grundsätzlich ein hohes Niveau auf. Der Vergleich der Werte zeigt, dass die Zähigkeit des Schweißguts des Erfindungsgegenstandes (2809) nur etwa 30% niedriger liegt als die des Grundwerkstoffs, die Zähigkeit des Schweißguts des Prüfstücks 2828 liegt noch etwas höher. Es ist kein Einbruch an der Schmelzlinie und schon gar nicht in der Wärmeeinflusszone zu beobachten. Die wesentlichen Ergebnisse sind in Tabelle 3 dargestellt.

Im Vergleich mit den Ergebnissen aus WIG - Schweißungen anderer bekannter Schweißzusätze mit angepasstem Wärmeausdehnungskoeffizienten liegt die Duktilität dieser Schweißgüter sehr hoch.

**Tabelle 3: Kerbschlagarbeit und -zähigkeit der geprüften Schweißverbindungen.**

| **-196°C** | LB 1107, Probe 2809 | | | LB 1165, Probe 2828 | | |
|---|---|---|---|---|---|---|
| SG | 61 J | 62 J | 55 J | 72 J | 67 J | 70 J |
| | 153 J/cm² | 155 J/cm² | 138 J/cm² | 186,4 J/cm² | 173,4 J/cm² | 182,5 J/cm² |
| | Mittel: **59 J / 148 J/cm²** | | | Mittel: **70 J / 174 J/cm²** | | |
| SL | 85 J | 87 J | 82 J | 249 J | 228 J | 241 J |
| | 213 J/cm² | 218 J/cm² | 205 J/cm² | 311 J/cm² | 285 J/cm² | 301 J/cm² |
| | Mittel: **85 J / 212 J/cm²** | | | Mittel: **239 J / 299 J/cm²** | | |
| SL + 2 mm | 100 J | 100 J | 92 J | 254 J | 231 J | 250 J |
| | 250 J/cm² | 250 J/cm² | 230 J/cm² | 317 J/cm² | 289 J/cm² | 313 J/cm² |
| | Mittel: **97 J / 243 J/cm²** | | | Mittel: **245 J / 306 J/cm²** | | |
| SL + 5 mm | 93 J | 96 J | 90 J | 246 J | 225 J | 228 J |
| | 233 J/cm² | 240 J/cm² | 225 J/cm² | 307 J/cm² | 281 J/cm² | 284 J/cm² |
| | Mittel: **93 J / 233 J/cm²** | | | Mittel: **233 J / 291 J/cm²** | | |
| **RT** | | | | | | |
| SG | 72 J | 81 J | 71 J | 82 J | 80 J | 74 J |
| | 180 J/cm² | 205 J/cm² | 178 J/cm² | 212 J/cm² | 205 J/cm² | 189 J/cm² |
| | Mittel: **75 J / 187 J/cm²** | | | Mittel: **79 J / 197 J/cm²** | | |

### Rund- und Flachzugversuche:

Die Ergebnisse der Rundzugversuche an den Schweißgutproben stellt Tabelle 4 dar. Das Augenmerk liegt hier insbesondere auf den bei Raumtemperatur bestimmten Festigkeitswerten, da die Festigkeit zu niedrigeren Temperaturen ansteigt, so dass Festigkeitsanforderungen, die bei Raumtemperatur erfüllt werden, immer auch bei tieferen Temperaturen erfüllt werden.

Die Streckgrenze der Probe 2809 liegt über 100 MPa über der des Grundwerkstoffs, die des Schweißguts 2828 liegt etwas niedriger bei 350 MPa.

**Tabelle 4: Ergebnisse der Rundzugversuche am Schweißgut. Zum Vergleich sind typische Werte des Grundwerkstoffs Ni36 gegenübergestellt.**

| **RT** | Probe 2809 | | Probe 2828 | | Grundwerkstoff Ni36, typische Werte |
|---|---|---|---|---|---|
| R_{p0,2} [MPa] | 387 | 385 | 351 | | 270 |
| Rₘ [MPa] | 524 | 531 | 486 | | 450 |
| A₅ | 28 | 27 | 26 | | 30 |

| **-196°C** | | | | | |
|---|---|---|---|---|---|
| R_{p0,2} [MPa] | 648 | 661 | 596 | 585 | 550 |
| Rₘ [MPa] | 859 | 864 | 831 | 853 | 850 |
| A₅ | 30 | 34 | 26 | 33 | 30 |

Die Tieftemperaturfestigkeitswerte insbesondere die Streckgrenze des Schweißguts aus LB 1107 liegen ebenfalls deutlich über den Werten des Grundwerkstoffs.

Die hohen Dehnwerte dokumentieren die Duktilität der Schweißzusatzwerkstoffe bis zu sehr niedrigen Temperaturen.

Ein wichtiges Merkmal der erfindungsgemäßen Werkstoffe ist die Verlagerung der Bruchlage von Schweißverbindungen bei Raumtemperatur vom Schweißgut in den Grundwerkstoff. Die Flachzugversuche an den Schweißverbindungen zeigen, dass dieses Ziel sicher erreicht wurde. Da die Proben im Grundwerkstoff gebrochen sind, entspricht die gemessene Festigkeit auch ziemlich genau der des Grundwerkstoffs.

Bei tiefen Temperaturen erscheint der Bruch im Schweißgut, allerdings auf einem Niveau, das sehr nahe an der Festigkeit des Grundwerkstoffs liegt - anders als bei Schweißungen mit artgleichem Schweißzusatz, bei denen die Festigkeit der Schweißverbindung deutlich niedriger ist.

**Tabelle 5: Ergebnisse der Flachzugversuche an Schweißverbindungen.**

| **RT** | Probe 2813 | | | Probe 2854 | | |
|---|---|---|---|---|---|---|
| R_{p0,2} [MPa] | 278 | 283 | 276 | 270 | 278 | 279 |
| Rₘ [MPa] | 452 | 450 | 444 | 437 | 446 | 441 |
| A₅ | 34 | 33 | 33 | 36 | 32 | 34 |
| Bruchlage | GW | GW | GW | GW | GW | GW |

| **-196°C** | | | | | | |
|---|---|---|---|---|---|---|
| R_{p0,2} [MPa] | 588 | 581 | 611 | 542 | 554 | 589 |
| Rₘ [MPa] | 822 | 820 | 819 | 830 | 813 | 835 |
| A₅ | 22 | 23 | 23 | 23 | 23 | 23 |
| Bruchlage | SG | SG | SG | SG | SG | SG |
| | GW: Grundwerkstoff | | SG: Schweißgut | | | |

### Biegeversuche:

Sämtliche Biegeproben - Decklage oder Wurzel in Zugbeanspruchung - ließen sich bis zu einem Biegewinkel von 180° ohne Anrisse biegen.

### Metallografische Untersuchungen:

Zur Überprüfung der Martensitbeständigkeit wurden die Schweißgutproben für eine Stunde auf -196°C gekühlt und anschließend auf Martensit geätzt. Es konnte kein Martensit gefunden werden. Dies bestätigen auch die Messungen des Längenausdehnungskoeffizienten, deren Temperaturverlauf keinerlei Anomalitäten aufweist.

## Patentansprüche

1. Mischkristallverfestigte Eisen-Nickel-Legierung mit einem Ausdehnungskoeffizienten < 5 x 10⁻⁶/K im Temperaturbereich zwischen Raumtemperatur und - 200°C, bestehend aus, in Gew.-%:
| | |
|---|---|
| C | 0,005 - 0,05 % |
| S | < 0,02 % |
| Cr | 1-2 % |
| Ni | 35 - 38 % |
| Mn | 0,3 - 1,5 % |
| Si | < 0,5 % |
| Al | 0,8 - 2,0 % |
| Ti | 0,2 - 1,0 % |
| Nb | 0,2 - 1,0 % |
| P | < 0,02 % |
| Co | 1,0 - 4,0 % |
| Fe | Rest und herstellungsbedingte Verunreinigungen. |

2. Legierung nach Anspruch 1, bestehend aus, in Gew.-%:
| | |
|---|---|
| C | 0,01 - 0,04 % |
| S | < 0,01 % |
| Cr | 1,0 - 1,8 % |
| Ni | 35,5 - 37,5 % |
| Mn | 0,5 - 1,3 % |
| Si | max. 0,3 % |
| Al | 1,0 - 1,8 % |
| Ti | 0,4 - 0,8 % |
| Nb | 0,4 - 0,8 % |
| P | < 0,01 % |
| Co | 1,2 - 3,0 % |
| Fe | Rest und herstellungsbedingte Verunreinigungen. |

3. Legierung nach Anspruch 1 oder 2, bestehend aus, in Gew.-%:
| | |
|---|---|
| C | 0,02 - 0,03 % |
| S | < 0,01 % |
| Cr | 1,2 - 1,8 % |
| Ni | 36 - 37 % |
| Mn | 0,8 - 1,3 % |
| Si | max. 0,3 % |
| Al | 1,0 - 1,5 % |
| Ti | 0,4 - 0,7 % |
| Nb | 0,4 - 0,7 % |
| P | < 0,01 % |
| Co | 1,2 - 1,8 % |
| Fe | Rest und herstellungsbedingte Verunreinigungen. |

4. Legierung nach einem der Ansprüche 1 bis 3, **dadurch gekennzeichnet, dass** der Gehalt, in Gew.-%, an
| | |
|---|---|
| Al | 1,1 und < 1,4 % |
beträgt.

5. Legierung nach einem der Ansprüche 1 bis 4, **dadurch gekennzeichnet, dass** der Gehalt, in Gew.-%, an
| | |
|---|---|
| Co | > 1,4 und < 1,7 % |
beträgt.

6. Legierung nach einem der Ansprüche 1 bis 5, wobei im Temperaturbereich ≤ - 165°C ein Ausdehnungskoeffizient < 4,5 x 10⁻⁶/K einstellbar ist.

7. Verwendung der Legierung nach einem der Ansprüche 1 bis 6 als Schweißzusatzwerkstoff.

8. Verwendung nach Anspruch 7 der Legierung nach einem der Ansprüche 1 bis 6, als Schweißzusatzwerkstoff für Eisen-Nickel-Legierungen, insbesondere mit etwa 36 Gew.-% Nickel, mit geringem Wärmeausdehnungskoeffizienten.

9. Verwendung nach einem der Ansprüche 7, 8, **dadurch gekennzeichnet, dass** die Tieftemperaturfestigkeitswerte des Schweißgutes oberhalb der Werte des Grundwerkstoffes angesiedelt sind.

10. Verwendung nach einem der Ansprüche 7 bis 9, **dadurch gekennzeichnet, dass** die Legierung durch das MSG-, WIG- oder Plasmaschweißen mit einem Grundwerkstoff auf Basis einer Eisen-Nickel-Legierung, insbesondere mit etwa 36 Gew.-% Nickel, in Wirkverbindung bringbar ist.

11. Verwendung der Legierung nach einem der Ansprüche 1 bis 6 im Tieftemperaturen ausgesetzten Rohrleitungsbau, insbesondere zum Transport von verflüssigten Gasen.

## Claims

1. A solid solution hardened iron-nickel alloy having a coefficient of dilatation of < 5 x 10⁻⁶/K in the temperature range comprised between room temperature and - 200°C, composed of in % by mass:
| | |
|---|---|
| C | 0.005 - 0.05 % |
| S | < 0.02 % |
| Cr | 1-2% |
| Ni | 35 - 38 % |
| Mn | 0.3 - 1.5 % |
| Si | < 0.5 % |
| Al | 0.8 -2.0 % |
| Ti | 0.2 - 1.0 % |
| Nb | 0.2 - 1.0 % |
| P | < 0.02 % |
| Co | 1.0 - 4.0 % |
| Fe | rest and production related impurities. |

2. An alloy according to claim 1, composed of in % by mass:
| | |
|---|---|
| C | 0.01 - 0.04 % |
| S | < 0.01 % |
| Cr | 1.0 - 1.8 % |
| Ni | 35.5 - 37.5 % |
| Mn | 0.5 - 1.3 % |
| Si | max. 0.3 % |
| Al | 1.0 - 1.8 % |
| Ti | 0.4 - 0.8 % |
| Nb | 0.4 - 0.8 % |
| P | < 0.01 % |
| Co | 1.2 - 3.0 % |
| Fe | rest and production related impurities. |

3. An alloy according to claim 1 or 2, composed of in % by mass:
| | |
|---|---|
| C | 0.02 - 0.03 % |
| S | < 0.01 % |
| Cr | 1.2 - 1.8 % |
| Ni | 36 - 37 % |
| Mn | 0.8 - 1.3 % |
| Si | max. 0.3 % |
| Al | 1.0 - 1.5 % |
| Ti | 0.4 - 0.7 % |
| Nb | 0.4 - 0.7.% |
| P | < 0.01 % |
| Co | 1.2 - 1.8 % |
| F e | rest and production related impurities. |

4. An alloy according to one of the claims 1 through 3, **characterized in that** the content of
Al is comprised between 1.1 and < 1.4 % by mass.

5. An alloy according to one of the claims 1 through 4, **characterized in that** the content of
Co is comprised between > 1.4 and < 1.7 % by mass.

6. An alloy according to one of the claims 1 through 5, wherein a coefficient of dilatation of < 4.5 x 10⁻⁶/K can be set in the temperature range of ≤ - 165°C.

7. A use of an alloy according to one of the claims 1 through 6 as filler metal.

8. A use according to claim 7 of an alloy according to one of the claims 1 through 6 as filler metal for iron-nickel alloys, in particular comprising approximately 36 % by mass nickel, having a low coefficient of thermal expansion.

9. A use according to one of the claims 7, 8, **characterized in that** the low temperature stability values of the welding deposit are above the values of the parent metal.

10. A use according to one of the claims 7 through 9, **characterized in that** the alloy can be actively related to a parent metal on the base of an iron-nickel alloy, in particular comprising approximately 36 % by mass nickel, by means of MSG, WIG or plasma jet welding.

11. A use of the alloy according to one of the claims 1 through 6 in the pipeline construction which is subject to low temperatures, in particular for the transport of liquefied gases.

## Revendications

1. Alliage fer nickel consolidé par solution solide, comprenant un coefficient de dilatation de < 5 x 10⁻⁶/K dans l'écart de températures compris entre température ambiante et -200°C, composé de, en % en poids :
| | |
|---|---|
| C | 0,005 - 0,05 % |
| S | < 0,02 % |
| Cr | 1-2% |
| Ni | 35 - 38 % |
| Mn | 0,3-1,5% |
| Si | < 0,5 % |
| Al | 0,8 - 2,0 % |
| Ti | 0,2 - 1,0 % |
| Nb | 0,2 - 1,0 % |
| P | < 0,02 % |
| Co | 1,0 - 4,0 % |
| Fe | le reste et des impuretés résultant de l'élaboration. |

2. Alliage selon la revendication 1, composé de, en % en poids :
| | |
|---|---|
| C | 0,01 - 0,04 % |
| S | < 0,01 % |
| Cr | 1,0 - 1,8 % |
| Ni | 35,5 - 37,5 % |
| Mn | 0,5 - 1,3 % |
| Si | max. 0,3 % |
| Al | 1,0- 1,8 % |
| Ti | 0,4 - 0,8 % |
| Nb | 0,4 - 0,8 % |
| P | < 0,01 % |
| Co | 1,2 - 3,0 % |
| Fe | le reste et des impuretés résultant de l'élaboration. |

3. Alliage selon la revendication 1 ou 2, composé de, en % en poids :
| | |
|---|---|
| C | 0,02 - 0,03 % |
| S | < 0,01 % |
| Cr | 1,2 - 1,8 % |
| Ni | 36 - 37 % |
| Mn | 0,8 - 1,3 % |
| Si | max. 0,3 % |
| Al | 1,0 - 1,5 % |
| Ti | 0,4 - 0,7 % |
| Nb | 0,4 - 0,7 % |
| P | < 0,01 % |
| Co | 1,2 - 1,8 % |
| Fe | le reste et des impuretés résultant de l'élaboration. |

4. Alliage selon l'une des revendications 1 à 3, **caractérisé en ce que** la teneur, en % en poids, de
Al est comprise entre 1,1 et < 1,4 %.

5. Alliage selon l'une des revendications 1 à 4, **caractérisé en ce que** la teneur, en % en poids, de
Co est comprise entre > 1,4 et < 1,7 %.

6. Alliage selon l'une des revendications 1 à 5, dans lequel on peut déterminer un coefficient de dilatation de < 4,5 x 10⁻⁶/K dans l'écart de températures de ≤ - 165°C.

7. Utilisation d'un alliage selon l'une des revendications 1 à 6 en tant que métal d'apport.

8. Utilisation selon la revendication 7 de l'alliage selon l'une des revendications 1 à 6 en tant que métal d'apport pour des alliages fer nickel, notamment comprenant environ 36 % en poids de nickel, ayant un faible coefficient de dilatation thermique.

9. Utilisation selon l'une des revendications 7, 8, **caractérisé en ce que** les valeurs de solidité aux basses températures du métal d'apport déposé sont supérieures aux valeurs du métal de base.

10. Utilisation selon l'une des revendications 7 à 9, **caractérisé en ce qu'**on peut activement relier l'alliage à un métal de base sur la base d'un alliage fer nickel, notamment comprenant environ 36 % en poids de nickel, par moyen de soudage MSG, soudage WIG ou soudage à l'arc de plasma.

11. Utilisation de l'alliage selon l'une des revendications 1 à 6 dans la construction de tuyauterie exposée aux basses températures, notamment pour le transport des gaz liquéfiés.
